# EUROPEAN PATENT APPLICATION

(11) **EP 2 091 211 A1**
(43) Date of publication of application: **19.08.2009**
(21) Application number: 08002825.1
(22) Date of filing: 15.02.2008
(51) Int. Cl.: H04L 29/08, G06F 17/30, G05B 19/418

(54) **Method for generic conversion between server data and client data**

(71) Applicant: SIEMENS AKTIENGESELLSCHAFT, 80333 München (DE)
(72) Inventor: Bigoloni, Maurizio, 20146 Milano (IT); Gallina, Davide, 20020 Lainate (IT)
(74) Representative: Kley, Hansjörg

(57) **Abstract**

Method for generic conversion between server data and client data, whereby the server data originates from various servers adapted to OPC standard, OPC being an abbreviation OLE for Process Control denoting an open standard specifying a communication of data between control devices from different manufacturers, OLE further standing for Object Linking and Embedding, OLE being a technology that allows embedding and linking objects to documents and other objects, and the client data having a format of and belonging to a high level application, comprising the steps of creating a set of conversion information (37), loading and parsing the set of conversion information (37), performing the generic conversion and transferring a converted data packet.

## Description

The invention relates to a method for generic conversion between server data and client data, especially for servers adapted to OPC standard, the server data needing to be exposed to client software applications like HMI, SCADA or Management Station.

OPC is an abbreviation for OLE for Process Control. OLE stands for Object Linking and Embedding and is a technology that allows embedding and linking to documents and other objects. This technology is mainly used for transfer of data between different applications.
OPC relates to an open standard specifying a data communication with field devices located on a plant, the field devices originating from different manufacturers. OPC defines a standard set of objects, methods and interfaces for use in process control and manufacturing automation applications to facilitate interoperability between the field devices produced by different manufacturers.

It is assumed that the following terms to be introduced later are adapted to the OPC standard, therefore the abbreviation OPC will be left out: server, server type, client, client type, interface, server command, server data packet, client command, client data packet, server data model, client data model.

The servers act as an Application Programming Interface (API) or protocol converter. They provide a method for various software packages to access data from the field devices, in other words a control device, such as a programmable logic controller (PLC). They expose a common interface to any application that is able to act as a client. Thus, the common interface has to be written once for a particular field device and then it can repeatedly be used by the client. The client is an application used to expose the data collected from the field devices via the servers to an end user, for example a process engineer. Typically, HMI, SCADA and Management Station are clients.
SCADA is an acronym for Supervisory Control And Data Acquisition and refers to a measurement and control system that is usually placed on top of a real-time control system to control a process. This includes for example manufacturing, production, fabrication, power generation processes, etc.
HMI is an acronym for Human Machine Interface and refers to a system, for example a software system, by which a user is able to interact with a machine, typically providing means for input, thus allowing the user to manipulate a system, output, thus allowing the system to produce an effect of the user's manipulation and graphical user interface, thus allowing the system to expose information to the user.
Management Station refers to systems analogue to SCADA.

In the field of process control a common task is to collect the data from the various field devices, usually originating from different vendors and expose it to a final user in a consistent way. Because of the fact that the field devices are produced by various hardware manufacturers, proprietary, manufacturer-specific data representations and data communication are used to describe states of the field devices and to trigger actions for the field devices. The hardware manufacturers usually provide a server that wraps the proprietary data communication with their field device and exposes to the client a standard interface. Since each server represents the data in its own server data model, meaning that the interface is standardized like mentioned above but the data passing through the interface is represented in a device-specific way, a common problem of the client is to convert the data of the field devices into its own internal client data model. Currently, two approaches are used to solve this problem.
A first approach is to represent the data collected from the field devices via the servers as it is, meaning that exactly a same value received from the server is represented on the client's user interface. To this scenario also belongs a representation of the data in a graphical way rather than the value itself, meaning that depending on the value, attributes of a graphical object are changed, for example a graphical representation of a temperature control unit which changes its colour to signal that a maximum allowable temperature of a device has been reached.
A second approach is to provide an advanced environment, typically using programming languages such as C++, Visual Basic or Java, in order to customize the representation of the data by developing an ad-hoc software program.

One goal to be achieved is to provide a solution consisting in having a data model converter which allows the generic conversion from various data models coming from servers into a common data model representing the internal data model of the client.

One way the goal is achieved is by providing a method for generic conversion between server data and client data, whereby the server data originates from various server types adapted to OPC standard, comprising the steps of
creating a set of conversion information containing conversion rules for an original data packet, the original data packet being converted between two data models: a server data model of a server type belonging to a server and a client data model of a client type belonging to a client, loading and parsing the set of conversion information 37 in order to perform the generic conversion between the server data model and the client data model,
performing the generic conversion of the original data packet between the two data models: the server data model, the client data model, the original data packet being of one of following defined types: a server command, a server data packet, a client command, a client data packet,
transferring a converted data packet, being a result of the generic conversion of the original data packet, for further processing by one of: server, client.

Features and advantages of the present invention will become more apparent from the following detailed description in conjunction with the following figures and example, whereby:
- Figure 1:: Example of a Management Station system setup controlling a simple installation
- Figure 2:: Setup of a system comprising a generic conversion between server data and client data

### Example 1: Data structure of a set of conversion information

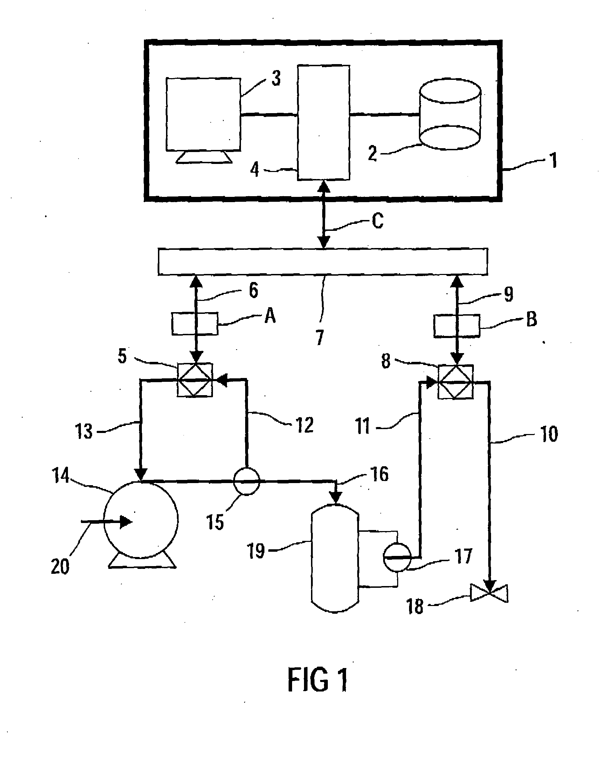

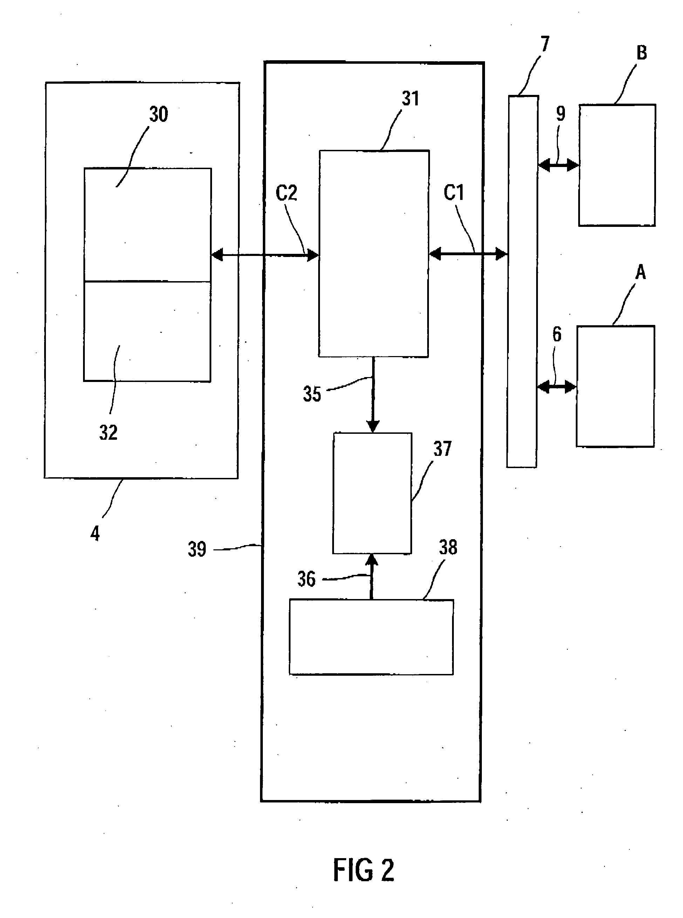

Figure 1 shows an example of a Management Station system 1 setup, comprising a management station computer 4 connected to a monitor 3 and a database 2. The Management Station system 1 communicates with the simple installation through an interface 7. The installation comprises an 8 bit PLC 5, controlling a pump 14 by means of a pump control line 13. The pump 14 has an inflow of liquid 20 which is pumped into a liquid container 19 through a tube 16 and passing through a flow measurement unit 15. The flow measurement unit transmits a value of measured flow through the tube 16 to the 8 bit PLC 5 by means of a flow data connection line 12. The installation further comprises a 16 bit PLC 8 receiving via a second communication line 11 a value of a measured level of the liquid container 19, acquired by a level measurement unit 17. The 16 bit PLC 8 controls a valve 18 by means of a valve control line 10.
The 8 bit PLC 5 transmits the value of measured flow through the tube 16 to the Management Station system 1 by means of a first bidirectional line 6. The 16 bit PLC 8 transmits the value of measured level of the liquid container to the Management Station system 1 by means of a second bidirectional line 9. Both the first bidirectional line 6 and the second bidirectional line 9 are connected to the interface 7 via a proprietary server A and a proprietary sever B respectively. The Management Station system 1 evaluates all information it receives from the 8 bit PLC 5 and the 16 bit PLC 8 and computes on the one hand an adjusted value for a required flow through the tube 16 such that a required level of liquid in the liquid container 19 is maintained and on the other hand an adjusted value of an outlet debit of the valve 18. Assuming the 8 bit PLC 5 is manufactured by vendor X and the 16 bit PLC is manufactured by vendor Y, both vendors X and Y provide the proprietary server A and the proprietary server B respectively. It is the responsibility of the interface 7 to pass two different data models to the Management Station system 1. Even though the interface 7 is standardized for a communication between servers and Management Station system 1, an 8 bit PLC data format differs from a 16 bit PLC data format, furthermore 8 bit PLC commands differ from 16 bit PLC commands.
As mentioned in the state of the art description, present solutions either pass data from each of the two PLCs without modifications to the Management Station system 1 or they implement customized routines for each of the two PLCs in order to convert data arriving into the Management Station system 1 in a unitary way. For clarity reasons, present solutions as well as the present invention are not shown in figure 1. The connection line C between the server 7 and the computer 4 belonging to the Management Station system 1 is an example where relevant entities of the present invention would be interconnected. This will be further described in figure 2.

Figure 2 shows a setup of a system comprising a generic conversion between server data and client data, whereby relevant entities of the present invention are enframed by a rectangle 39. These relevant entities are: a data model converter 31 which loads 35 a set of conversion information 37 created 36 by an editor 38. The proprietary server A and the proprietary server B are connected to the interface 7 by the first bidirectional line 6 and the second bidirectional line 9 as shown in figure 1. A first line part C1 and a second line part C2 represent portions of the connection line C shown in figure 1, with the relevant entities of the present invention interconnected. The second line part C2 connects the data model converter 31 with a Management Station server 30 comprised in the Management Station computer 4. A Management Station client 32 is handling a user interface not shown in figure 2. For reasons of clarity it shall be noted that the client (OPC client) referred to throughout the description of the method comprises both the Management Station client 32 and the Management Station server 30, both of which denote an internal part of the structure of the client. Furthermore the abbreviations 35 and 36 are used only in the figure 2 to explain an action of load and create respectively.
In the example of figure 1, the set of conversion information contains both data formats and commands of the 8 bit and the 16 bit PLC. Thus, a programming of specialized interpretation routines for each of the two PLCs becomes obsolete and reduces an implementation effort significantly. Other advantages are an easy maintenance of a system implementing the method described herein and a reduced error probability.

Example 1 shows the structure of the set of conversion information 37 for one server called "Example OPC Server" and one client being a Management Station indexed by "MS..".

### <OPCServers>

```
     <OPCServer ServerId="1" Name="Example OPC Server"
                           progId="Example.OPCServer">
       <OPCItemClasses>
          <OPCItemClass ServerId="1" Id="1" Name="...">
               <StateLifeCycle Type="0">
                    <State OPCValue="..." MSState="..." />
                    <State OPCValue="..." MSState="..." />
               </StateLifeCycle>
               <CmdLifeCycle Type="0" >
                    <Cmd MSCommand="..." OPCCommand="..."/>
               </CmdLifeCycle>
          </OPCItemClass>
       </OPCItemClasses>
     </OPCServer>
 </OPCServers>
```

The field "<OPCServer......>" denotes the unique server type tag and contains information about a special type of server and a way of identification of this type of server. The "<OPCItem-Classes> contains conversion information for the special type of server, which is divided in "<OPCItemClass>" types defined different classes of the server commands and the server data packets. Thus, the "<OPCItemClass>" contains definitions of conversions for server commands within the scope of "<CmdLifeCycle>" which is the server command type tag and definitions of conversions for server data packets within the scope of "<StateLifeCycle>" which is the server data type tag. The conversion of server commands into client commands is stored in line: <Cmd MSCommand... > and the conversion of server data packets into client data packets is stored in line: <State OPCValue... >.

In many cases data originating from a server is related to states of a certain field device whereas data originating from a client is related to actions, in other words commands, which are issued upon receipt of a state of the certain field device in order to change, adjust, etc, that state. This is the reason why in example 1 the definitions of conversions for server data packets show a conversion from an OPC value to a Management Station value, in other words a conversion from an OPC state to a MS state. Analogue, the definitions of conversions for server commands show a conversion from Management Station client commands into OPC server commands. Thus, example 1 describes a special case of the present invention.

The set of conversion information 37 is created and stored into an extensible mark-up language (XML) file by means of an editor. This allows any end user to easily create, edit and save the set of conversion data. This method is especially advantageous because it allows fast updates of the XML file in case a new server type and/or a new client type is added to a system. In complex systems, such as manufacturing plants, it is frequently the case that the field devices have to be updated and/or replaced and/or new field devices have to be added, thus it is imperative that a fast adaptation of a process control to such a new configuration is performed.

A unique server type tag for each server type is comprised in the set of conversion information 37. A server command type tag and a server data type tag are stored within a scope of the unique server type tag. At least one server command and at least one server data packet, both being part of the server data model, are stored within a scope of the server command type tag and the server data type tag respectively. In a context of the fast adaptation mentioned above, special care is taken to provide a simple and clear structure of the set of conversion information 37. Thus, all information regarding the generic conversion of data to and/or from a certain server type is stored within the scope of unique server type tags associated with the certain server type, in other words delimiters. A further step to improve clarity of the structure of the set of conversion information 37 is to sort the data being particular to the server data model, as well data being particular to the client data model by its type. Hereby, the data being particular to the server data model is split into server commands and server data packets and the data being particular to the client data model is split into client commands and client data packets. Client and server data packets cover status information and/or value information concerning an associated field device. Client and server commands cover actions to be taken into a system. This structure of the set of conversion information 37 is further advantageous because it allows a faster look-up of needed conversion information for the data model converter 31, such that in a first step, the said data model converter 31 only has to parse server type tags and in a second step, after it found a correct server type, it looks for either a correct server command type tag or a correct server data type tag, depending on type of a data packet it has to convert.

A mapping of each of the at least one server command and each of the at least one server data packet to a corresponding client command and a corresponding client data packet respectively is performed, the said client command and the said client data packet both being part of at least one client data model. This provides the actual conversion information between the client data model and the server data model. The structure of the set of conversion information 37 also allows an adaptation of the set of conversion information 37 for multiple client data models. An advantage is that a creation and/or maintenance of multiple sets of conversion information for multiple client data models are avoided.

According to a preferred method, a data model converter 31 loads the set of conversion information 37 into a memory entity and carries out the generic conversion by following the steps of:
analysing the original data packet for an identification as
being of one of the defined types,
discarding the original data packet in case it is of an undefined type,
finding a conversion rule in the set of conversion information 37, such that, in case the original data packet has been identified as being of one of the defined types, the generic conversion of the original data packet between the two data models is carried out,
converting the original data packet between the two data models, yielding a converted data packet,
transferring the converted data packet to the client in case the original data packet belongs to the server data model, transferring the converted data packet to the server in case the original data packet belongs to the client data model. The step of analysing the data packets means that each received data packet is checked, with the purpose to identify it as being either a server command or a server data packet or a client command or a client data packet, in order for the data model converter 31 to determine necessary parameters to be able to perform a search through the set of conversion information 37. The step of discarding the original data packet is carried out if an unknown data packet has been received. Optionally, the end user on client side is informed about an unsupported type of data packet, such that the said end user is able to detect errors, for example errors in a communication system. The step of finding the conversion rule in the set of conversion information 37 is performed upon a successful identification of the original data packet as being of one of the defined types. In this case, a search through the set of conversion information 37 is performed in order to find the conversion information for the original data packet. As soon as an entry describing the mapping of the original data packet to a corresponding data packet of a requested target data model has been found, the next step is performed, consisting in converting the original data packet into a converted data packet. Hereafter, the converted data packet is transferred to either the client, if the converted data packet is of client type, or the server, if the converted data packet is of server type.
The data model converter 31 communicates with the client by means of a first bidirectional interface and with the server by means of a second bidirectional interface, both the first and the second bidirectional interfaces being adapted to send and receive data. The converted data packet is transferred via one of: the first bidirectional interface, the second bidirectional interface.
A preferred embodiment of the method as described above comprises integrated circuits implementing all necessary algorithms to carry out operations required by the method, furthermore a communication interface, used for the first bidirectional interface and the second bidirectional interface, supporting at least one type of communication protocol type and a memory entity to store any of results, intermediate results, program code, microprogram code, etc. An advantage is an increase of flexibility regarding compatibility to various communication interfaces employed in a field of use. A further advantage is an increase of processing speed by realizing a hardware solution of the method described, especially in environments requiring a high data throughput.

**List of Abbreviations**

| | |
|---|---|
| A | = proprietary server A |
| B | = proprietary server B |
| C | = connection line |
| C1 | = first line part |
| C2 | = second line part |
| 1 | = Management Station system |
| 2 | = database |
| 3 | = monitor |
| 4 | = Management Station computer |
| 5 | = 8 bit PLC |
| 6 | = first bidirectional line |
| 7 | = interface |
| 8 | = 16 bit PLC |
| 9 | = second bidirectional line |
| 10 | = valve control line |
| 11 | = second communication line |
| 12 | = flow data connection line |
| 13 | = pump control line |
| 14 | = pump |
| 15 | = flow measurement unit |
| 16 | = tube |
| 17 | = level measurement unit |
| 18 | = valve |
| 19 | = liquid container |
| 20 | = inflow of liquid |
| 30 | = Management Station server |
| 31 | = data model converter |
| 32 | = Management Station client |
| 35 | = load a set of conversion information |
| 36 | = create a set of conversion information |
| 37 | = set of conversion information |
| 38 | = editor |
| 39 | = rectangle |

## Claims

1. Method for generic conversion between server data and client data, whereby the server data originates from various server types adapted to OPC standard, comprising the steps of
a) creating a set of conversion information (37) containing conversion rules for an original data packet, the original data packet being converted between two data models: a server data model of a server type belonging to a server and a client data model of a client type belonging to a client,
b) loading and parsing the set of conversion information (37) in order to perform the generic conversion between the server data model and the client data model,
c) performing the generic conversion of the original data packet between the two data models: the server data model, the client data model, the original data packet being of one of following defined types: a server command, a server data packet, a client command, a client data packet,
d) transferring a converted data packet, being a result of the generic conversion of the original data packet, for further processing by one of: server, client.

2. Method according to claim 1, whereby the set of conversion information (37) is created and stored into an extensible mark-up language file by means of an editor.

3. Method according to claim 1 or 2, whereby a unique server type tag for each server type is comprised in the set of conversion information (37).

4. Method according to claim 3, whereby a server command type tag and a server data type tag are stored within a scope of the unique server type tag.

5. Method according to claim 4, whereby at least one server command and at least one server data packet, both being part of the server data model, are stored within a scope of the server command type tag and the server data type tag respectively.

6. Method according to claim 5, whereby a mapping of each of the at least one server command and each of the at least one server data packet to a corresponding client command and a corresponding client data packet respectively is performed, the said client command and the said client data packet both being part of at least one client data model.

7. Method according to one of the preceding claims, whereby a data model converter (31) loads the set of conversion information (37) into a memory entity and carries out the generic conversion by following the steps of:
1) analysing the original data packet for an identification as being of one of the defined types,
2) discarding the original data packet in case it is of an undefined type,
3) finding a conversion rule in the set of conversion information (37), such that, in case the original data packet has been identified as being of one of the defined types, the generic conversion of the original data packet between the two data models is carried out,
4) converting the original data packet between the two data models, yielding a converted data packet,
5) transferring the converted data packet to the client in case the original data packet belongs to the server data model,
6) transferring the converted data packet to the server in case the original data packet belongs to the client data model.

8. Method according to claim 7, whereby the data model converter (31) communicates with the client by means of a first bidirectional interface and with the server by means of a second bidirectional interface, both the first and the second bidirectional interfaces being adapted to send and receive data.

9. Module for implementing the method according to claims 1 to 8, comprising integrated circuits, a communication interface and a memory entity.
